# EUROPEAN PATENT APPLICATION

(11) **EP 4 730 177 A1**
(43) Date of publication of application: **22.04.2026**
(21) Application number: 25209164.0
(22) Date of filing: 16.10.2025
(51) Int. Cl.: G06F 21/57, G06F 21/60, H04L 41/22

(54) **DATABASE CONSTRUCTION METHOD AND SYSTEM FOR CYBERSECURITY REGULATION COMPLIANCE**

(30) Priority: 21.10.2024 KR 20240144022; 21.10.2024 KR 20240144023; 06.03.2025 KR 20250029313; 20.06.2025 KR 20250081821
(71) Applicant: Fescaro Co. Ltd., Suwonsi, Gyeonggi-do 16512 (KR)
(72) Inventor: HONG, Seokmin, 16512 Gyeonggi-do (KR); LEE, Hyunjung, 16512 Gyeonggi-do (KR)
(74) Representative: Ström & Gulliksson AB

(57) **Abstract**

Provided is a database construction method able to efficiently comply with cybersecurity regulations, the database construction method including displaying a first interface for one or more predefined preconfiguration items related to cybersecurity, providing a second interface which enables inputting datasets for properties of the preconfiguration items included in the first interface, providing a third interface which enables setting a relationship between two predefined preconfiguration items among the plurality of preconfiguration items, and setting a relationship between a specific dataset of a first preconfiguration item and a specific dataset of a second preconfiguration item among the plurality of preconfiguration items using a value obtained via the third interface.

## Description

### BACKGROUND

### 1. Field

The following embodiments relate to a database construction method and system for cybersecurity regulation compliance.

### 2. Description of the Related Art

The mobility industry currently faces a significantly heightened threat of cyberattacks due to increased vehicle electrification and connectivity. Consequently, there is an increasing international trend toward strengthening cybersecurity regulations. For example, the United Nations Economic Commission for Europe (UNECE) has established the international standard United Nations Regulation No. 155 (UNR 155) for automotive cybersecurity, and the Ministry of Land, Infrastructure and Transport of the Republic of Korea amended Automobile Management Act to require that only automotive manufacturers and importers/distributors having a certified cybersecurity management system (CSMS) may sell vehicles domestically. Furthermore, the Cyber Resilience Act (CRA), which mandates that for all products containing digital elements (hardware and software) released or distributed in the European Union (EU) market, cybersecurity must be strengthened and managed throughout the entire lifecycle of products, is also scheduled for implementation, and will impact the entire mobility industry.

Various cybersecurity regulations require systematic processes and management systems to manage cyber threats and risks and protect mobility devices from cyberattacks, and to comply with such regulations, a system is needed to ensure cybersecurity throughout the entire lifecycle of mobility devices, including design, development, production, and maintenance.

### SUMMARY

An objective of the disclosure is to provide a database construction method and system able to efficiently comply with cybersecurity regulations.

The objectives of the disclosure are not limited to the foregoing description, and other objectives not explicitly disclosed herein will be understood from the description provided hereinafter and more clearly understood by embodiments of the disclosure. It may also be understood that the problems and advantages addressed by the disclosure may be realized by means set forth in the claims and combinations thereof.

According to embodiments of the disclosure, a database construction method able to efficiently comply with cybersecurity regulations includes: displaying a first interface for one or more predefined preconfiguration items related to cybersecurity; providing a second interface which enables inputting datasets for properties of the preconfiguration items included in the first interface; providing a third interface which enables setting a relationship between two predefined preconfiguration items among the plurality of preconfiguration items; and setting a relationship between a specific dataset of a first preconfiguration item and a specific dataset of a second preconfiguration item among the plurality of preconfiguration items using a value obtained via the third interface.

According to the disclosure, database construction method may further include: after setting the relationship between the datasets, obtaining a threat scenario; providing a fourth interface which enables setting a relationship between the obtained threat scenario and a predefined threat; and setting one or more specific datasets of the predefined threat mapped to a specific dataset of the threat scenario using a value obtained via the fourth interface.

According to the disclosure, the database construction method may further include: after setting the relationship between the datasets, obtaining a security goal corresponding to a specific threat scenario among the threat scenarios; providing a fifth interface which enables setting a relationship between the obtained security goal and security control; and setting one or more specific datasets of the security control connected to a specific dataset of the security goal using a value obtained via the fifth interface.

According to the disclosure, the fourth interface may provide a list of the predefined threats mappable to the dataset of the threat scenario, and map a dataset of the predefined threat selected by a user from the list to the specific dataset of the threat scenario.

According to the disclosure, the fifth interface may provide a dataset list of the security control mappable to the specific dataset of the security goal, and map a dataset selected by a user from a dataset list of the security control to a specific dataset of the security goal.

According to the disclosure, a dataset list of the predefined threat or the dataset list of the security control may be based on a value obtained via the second interface.

According to the disclosure, a specific dataset of the one or more predefined preconfiguration items may be linked to a specific dataset of the threat scenario or the security goal.

According to the disclosure, the one or more preconfiguration items may be changed on the first interface based on operator input.

According to the disclosure, the first interface may provide an interface for adding preconfiguration items or item-specific properties other than the predefined preconfiguration items or the predefined item-specific properties based on user input, and provide change history information about properties of the predefined preconfiguration items.

According to the disclosure, the dataset input via the second interface may include a value of an identifier field which uniquely identifies each dataset of the properties of the preconfiguration items.

According to the disclosure, providing the third interface may provide an interface which enables linking and inputting a specific dataset of the first preconfiguration item and a specific dataset of the second preconfiguration item.

According to the disclosure, the third interface may include mapping an identifier corresponding to a specific dataset of the first preconfiguration item to an identifier corresponding to a specific dataset of the one or more second preconfiguration items or mapping an identifier corresponding to a specific dataset of the second preconfiguration item to an identifier corresponding to a specific dataset of the one or more first preconfiguration items.

According to the disclosure, wherein the third interface may be an interface which enables setting a relationship between two predefined preconfiguration items among the plurality of preconfiguration items.

According to the disclosure, the first and second predefined preconfiguration items among the preconfiguration items may be one of "security control-security control requirement," "verification test case- security control requirement," "predefined threat-penetration test case," or "'predefined threat-predefined mitigation."

According to other embodiments, a database construction system for cybersecurity regulation compliance is configured to: display a first interface for one or more predefined preconfiguration items; provide a second interface which enables inputting datasets for properties of the preconfiguration items included in the first interface; provide a third interface which enables setting a relationship between two predefined preconfiguration items among the plurality of preconfiguration items; and set a relationship between a specific dataset of a first preconfiguration item and a specific dataset of a second preconfiguration item among the plurality of preconfiguration items using a value obtained via the third interface.

### BRIEF DESCRIPTION OF THE DRAWINGS

The above and other aspects, features, and advantages of certain embodiments of the disclosure will be more apparent from the following description taken in conjunction with the accompanying drawings in which:
FIG. 1 is a system diagram illustrating a database construction method for cybersecurity regulation compliance according to embodiments;
FIG. 2 is a diagram illustrating a first screen of a first interface according to embodiments of the disclosure;
FIG. 3 is a diagram illustrating a second screen of the first interface according to embodiments of the disclosure;
FIG. 4 is a diagram illustrating a second interface for dataset input for preconfiguration item-specific properties according to embodiments of the disclosure;
FIG. 5 is a diagram illustrating a third interface for setting relationships between datasets of preconfiguration items according to embodiments of the disclosure;
FIG. 6 is a diagram illustrating a fourth interface for setting relationships between threat scenarios and predefined threats according to embodiments of the disclosure;
FIG. 7 is a diagram illustrating a fifth interface for setting the relationship between a security goal and a security control according to embodiments of the disclosure;
FIG. 8 is a flowchart illustrating operations of the operation server and the user terminal in the preconfiguration process according to embodiments;
FIG. 9 is a flowchart illustrating operations of the operation server and the user terminal in the individual engineering process according to embodiments; and
FIG. 10 is a block diagram of a server according to embodiments.

### DETAILED DESCRIPTION

Advantages and features of the disclosure, as well as methods of realizing the same, will be more clearly understood from the following detailed description of embodiments when taken in conjunction with the accompanying drawings. However, the disclosure is not limited to specific embodiments to be described hereinafter but should be understood as including a variety of modifications, equivalents, and alternatives within the spirit and scope of the disclosure.

Terms used herein are used to describe particular embodiments and are not intended to limit the disclosure. Singular forms are intended to include plural forms, unless the context clearly indicates otherwise. Terms, such as "comprise/include" or "have," or the like, as used herein, indicate that a feature, a number, a step, an operation, a component, a part or a combination thereof described in the disclosure is present, but do not preclude the possibility of the presence or addition of one or more other features, numbers, steps, operations, components, parts or combinations thereof in advance.

Some embodiments of the disclosure may be indicated by functional block components and various processing operations. Some or all of these functional blocks may be implemented using various numbers of hardware and/or software components which perform particular functions. For example, the functional blocks of the disclosure may be implemented using one or more microprocessors or circuits for a given function. For example, the functional blocks of the disclosure may be implemented in various programming or scripting languages. The functional blocks may be implemented with algorithms running on one or more processors. The disclosure may also employ conventional techniques for electronic environment setting, signal processing, and/or data processing. The terms "mechanism," "element," "means" and "configuration" may be used in a broad sense and are not limited to mechanical and physical configurations.

Connecting lines or connecting members between the components illustrated in the drawings are merely illustrative of functional connections and/or physical or circuit connections. In actual devices, connections between components may be indicated by various functional connections, physical connections, or circuit connections which may be replaced or added.

Actions performed by a user below may refer to actions performed by the user via a user terminal. For example, commands corresponding to actions performed by the user may be input to the user terminal via input devices embedded in or additionally connected to the user terminal (e.g., a keyboard, a mouse, or the like). In another example, commands corresponding to actions performed by the user may be input to the user terminal via a touch screen of the user terminal. In this case, the actions performed by the user may include selectable gestures. For example, such gestures may include tapping, touching and holding, double tapping, dragging, panning, flicking, dragging and dropping, and the like.

Hereinafter, the disclosure will be described in detail with reference to the accompanying drawings.

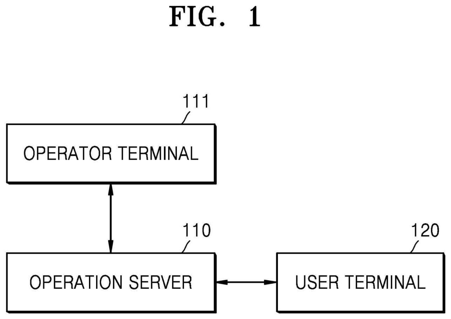

FIG. 1 is a system diagram illustrating a database construction method for cybersecurity regulation compliance according to embodiments of the disclosure.

A system according to embodiments may include an operation server 110, an operator terminal 111, and a user terminal 120.

In an embodiment, the operation server 110 is a server which provides a database construction method for cybersecurity regulation compliance. The operation server 110 may be controlled by the operator terminal 111 to provide an interface to the user terminal 120 and process data.

The operator terminal 111 is a terminal used by an operator to operate and manage the operation server 110, and enables the operator to access the operation server 110 and perform overall system setting and management. The user terminal 120 is a terminal which enables users to input and manage cybersecurity data via a user interface provided by the operation server 110. At this time, the user may be a cybersecurity officer of an automotive manufacturer (OEM) or a controller/component manufacturer (Tier), and the number of officers may be one or more. The operator terminal 111 and the user terminal 120 may include input/output devices for data input and output.

The operation server 110 according to embodiments may include a processor and a database (hereinafter referred to as the "DB"), though neither is shown in FIG. 1. Hereinafter, the DB construction method able to efficiently respond to cybersecurity regulations for regulatory compliance according to the disclosure will be described through explanation of the operation server 110.

In an embodiment, the processor of the operation server 110 may provide a preconfiguration process and an individual engineering process for cybersecurity regulation compliance. The preconfiguration process of the disclosure refers to the process of organizing information related to preconfiguration items among cybersecurity items into the DB at the vehicle manufacturer (OEM) level, prior to the individual engineering process related to the individual vehicle or project level. More specifically, in the preconfiguration process, data about predefined preconfiguration items, user-input preconfiguration items, and item-specific properties for preconfiguration items may be stored in the DB. Furthermore, in the preconfiguration process, relationships between preconfiguration items may be automatically designed and generated based on user input.

The preconfiguration process is not merely for data organization; its primary purpose is to establish a centralized and reusable library of an OEM's standard cybersecurity assets. By doing so, the system ensures that all subsequent engineering activities for different vehicle projects start from a consistent and compliant baseline, thereby standardizing the cybersecurity approach across the entire organization.

Furthermore, in the preconfiguration process, the processor of the operation server 110 may provide a first interface to the user terminal 120. The first interface may provide or indicate predefined preconfiguration items and item-specific properties, add the preconfiguration items or the item-specific properties based on user input, or provide an environment for setting relationships between the preconfiguration items based on user input. At this time, even in the case using the first interface, the user is not allowed to change the predefined preconfiguration items and the item-specific properties, and only the operator is allowed to change the predefined preconfiguration items and the item-specific properties.

In the preconfiguration process, the processor of the operation server 110 may provide a second interface to the user terminal 120. The second interface may provide an environment for inputting a dataset for item-specific properties for the preconfiguration items included in the first interface.

Furthermore, in the preconfiguration process, the processor of the operation server 110 may provide a third interface to the user terminal 120. The third interface may provide an environment where the relationship between a pair of two predefined preconfiguration items among the preconfiguration items may be set based on user input. More specifically, in the relationships between preconfiguration items set by user input, respective relationship pairs between inputtable preconfiguration items may be fixed, and predefined item-specific properties (e.g., item-specific IDs) mapped for relationships may also be pre-fixed. For example, the user may set relationships between preconfiguration items via the third interface, but preconfiguration item pairs, of which the relationships may be set, may be restricted to standardized pairs required by the third interface. Details of the first to third interfaces will be described later with reference to the accompanying drawings.

Furthermore, the processor of the operation server 110 may provide an individual engineering process. The individual engineering process corresponds to entire individual cybersecurity engineering levels such as vehicle level, component level, and system level. In this regard, for cybersecurity regulatory compliance, threat scenarios may be generated during threat analysis and risk assessment (TARA) activities at respective levels, and the processor of the operation server 110 may obtain the generated threat scenarios. In the individual engineering process, the processor of the operation server 110 may provide the user terminal 120 with a fourth interface which provides an environment for inputting mapping information between obtained threat scenarios and predefined threats and a fifth interface which provides an environment for inputting mapping information between a security goal corresponding to a specific threat scenario among the threat scenarios and a security control. In the individual engineering process, the relationships between the preconfiguration items and the predefined threats or the security goal may be automatically set based on user input obtained via the fourth or fifth interface, and the relationships among the entire cybersecurity items, including the preconfiguration items, may be automatically set.

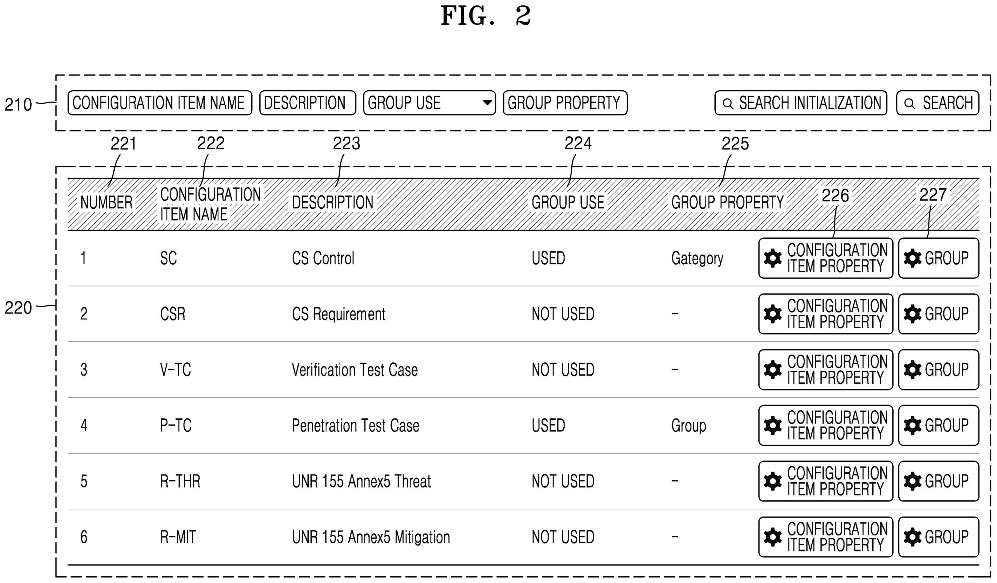

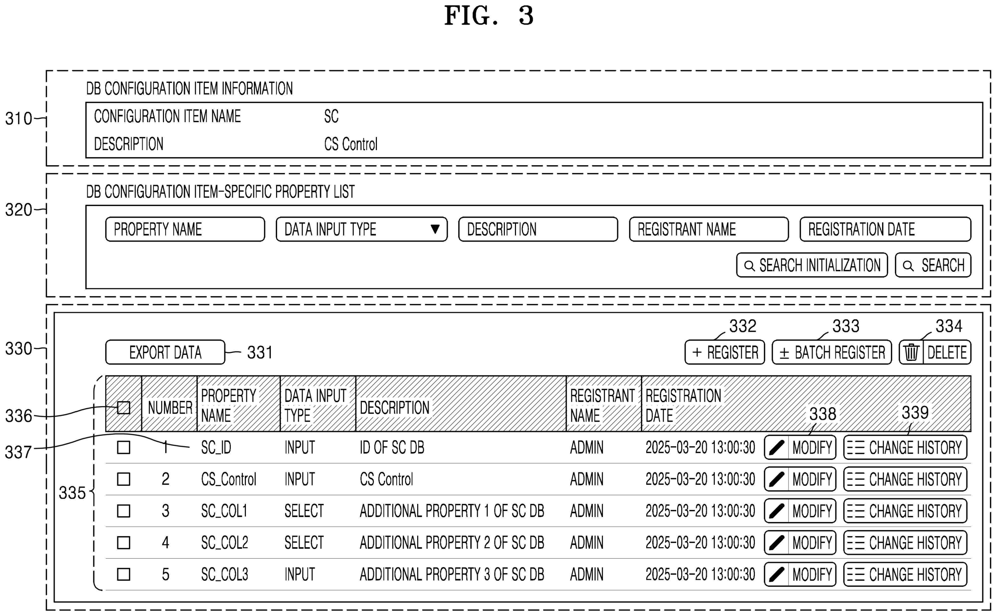

The operation server 110 may include one or more DBs for storing and providing the above-described interfaces. The processor may provide one or more interfaces to the user terminal 120 based on data stored in the DBs of the operation server 110. More specifically, the DB may include information about the preconfiguration items and the respective item-specific properties. In an embodiment, the DB may include, as predefined preconfiguration items, information about a cybersecurity control (hereinafter, referred to as "SC"), cybersecurity control requirements (hereinafter, referred to as "CSR"), verification test cases (hereinafter, referred to as "V-TC"), penetration test cases (hereinafter, referred to as "P-TC"), predefined threats (e.g., threats defined in regulations or the like (hereinafter, referred to as "THR")), and predefined mitigation measures (e.g., mitigations defined in regulations or the like (hereinafter, referred to as "MIT")). In an embodiment, the THR may be UNR 155 Annex5 Threat, and the MIT may be UNR 155 Annex5 Mitigation, but these are merely examples, and threats and mitigation measures defined in regulations or the like may be the THR and the MIT of the disclosure. However, note that the predefined preconfiguration items in the above example are merely examples and additions or changes are possible according to embodiments of the disclosure. In addition to the predefined preconfiguration items, additional preconfiguration items and item-specific properties may be stored in the DB based on user input. The first interface of FIGS. 2 and 3 to be described later may also be provided to provide preconfiguration items and the respective item-specific properties or to receive data related to the preconfiguration items. For the sake of brevity, the preconfiguration items may be referred to as configuration items in the following specification.

In an embodiment, the SC refers to protective measures or countermeasures implemented to protect information systems, organizations, assets, and data. The CSR is also a specific condition or specification which must be met to effectively implement the security control. The V-TC is a series of conditions and stages designed to check whether a specific function or system operates as intended. The P-TC is a scenario designed to identify the security vulnerability of a system and evaluate the system from an attacker's perspective. The THR is a risk factor defined in regulations or the like, and, for example, may be a potential risk factor related to vehicle cybersecurity specified in Annex 5 of UN Regulation No. 155. The MIT refers to mitigation measures defined in regulations or the like, and may be countermeasures or protective measures against identified cybersecurity threats presented in Annex 5 of UN Regulation No. 155. However, it should be noted that the names and definitions of preconfiguration items described herein may be changed based on operator or user input.

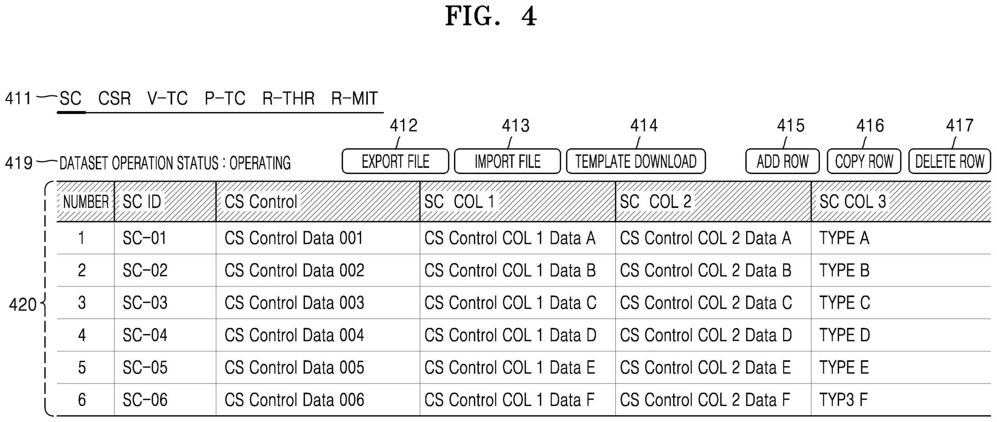

The DB of the operation server 110 includes dataset information about the configuration item-specific properties. The DB may store specific dataset information about the above-described configuration item-specific properties and include dataset information about properties of any of the SC, CSR, V-TC, P-TC, THR, and MIT. The second interface of FIG. 4 to be described later may be provided to receive input datasets for the above-described configuration item-specific properties.

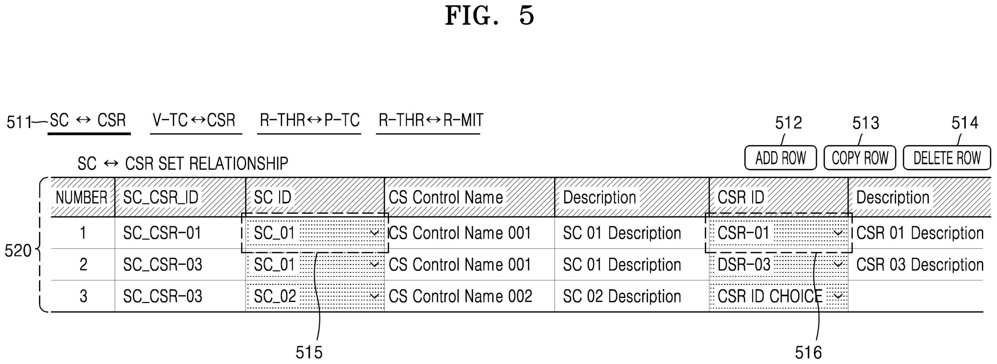

The DB of the operation server 110 includes information about the relationships between preconfiguration items. Specifically, the "relationships between preconfiguration items" may refer to the relationships linking specific datasets for the properties of the respective preconfiguration items. In this case, the relationships between preconfiguration items stored in the DB may be defined as the relationships between specific datasets of a pair of two preconfiguration items (i.e., a first preconfiguration item and a second preconfiguration item). Here, the relationship of [specific dataset of the first preconfiguration item to specific dataset of the second preconfiguration item] may be mapped as 1:1, 1:N, or N:1. In the following specification, for convenience of explanation, the "relationships between specific datasets of a preconfiguration item pair" may be briefly referred to as the "relationships between preconfiguration items." In a specific embodiment, the preconfiguration item pair may be any pair of SC and CSR, CSR and V-TC, and THR and P-TC. Furthermore, the third interface of FIG. 5 to be described later may be provided to receive the input of the above-described relationships between preconfiguration items.

Here, 'setting a relationship' specifically refers to creating a persistent, traceable link between the unique identifiers (IDs) of two distinct data objects within the system's database. For instance, as shown in FIG. 5, the ID of a Security Control (SC) object is explicitly mapped to the ID of one or more Cybersecurity Requirement (CSR) objects. This mapping ensures that the logical dependency between these items is maintained and can be automatically verified by the system.

More specifically, the user may set the relationship between a specific dataset of the first preconfiguration item and a specific dataset of the second preconfiguration item via the third interface. Each preconfiguration item is assigned a unique identifier (ID). The specific value of this identifier, such as 'SC-01', is then used to map relationships. In this case, the DB may map an ID corresponding to a specific dataset of the first preconfiguration item to one or more ID corresponding to a specific dataset of the second preconfiguration item.

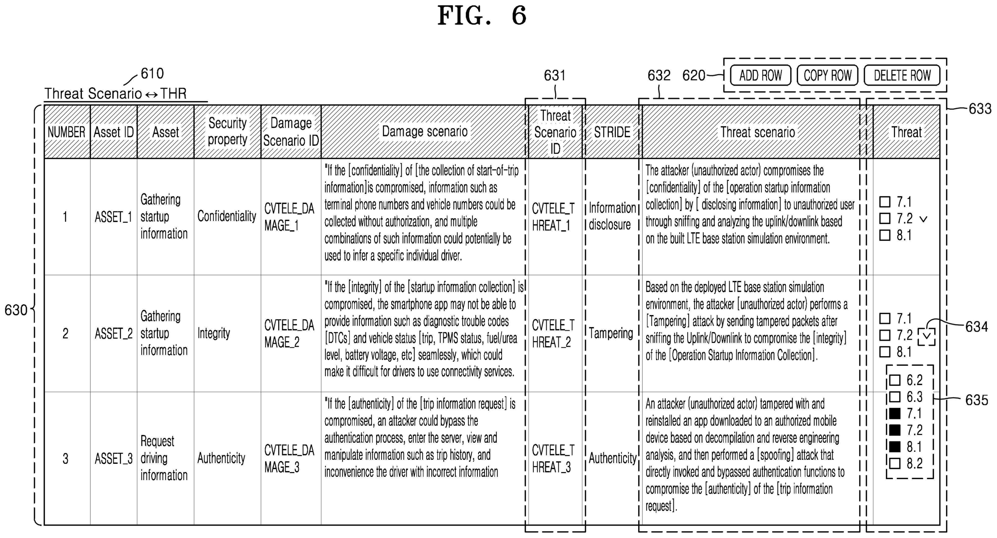

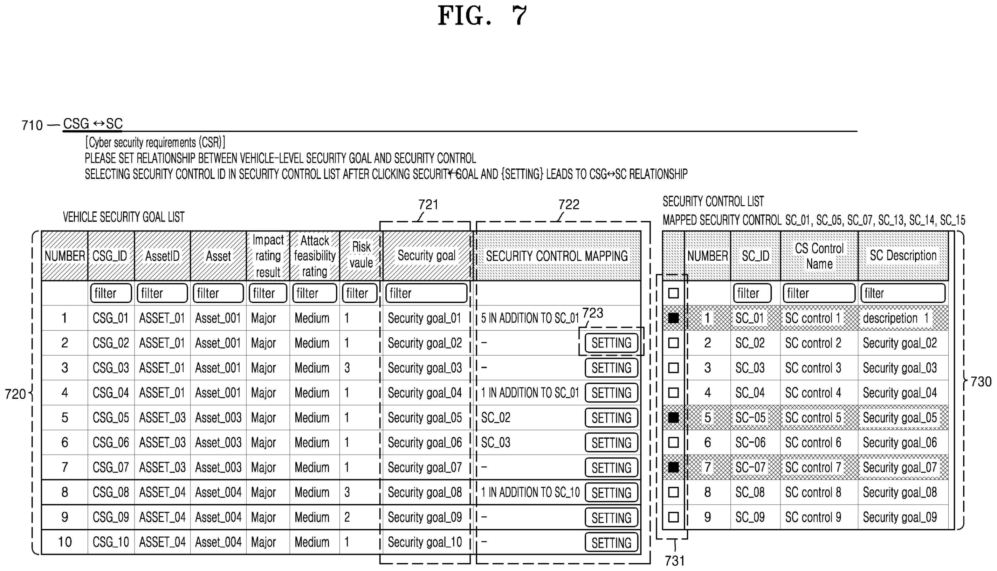

Furthermore, the DB of the operation server 110 may store and manage data related to cybersecurity items in the individual engineering process (e.g., individual vehicle levels, component levels, and system levels). In this case, the cybersecurity items in the individual engineering process may be threat scenarios or cybersecurity goals (CSGs), and the DB may store the relationships between the threat scenarios or CSGs and the preconfiguration items. More specifically, the DB may store relationship information between threat scenarios, which are obtained in the individual engineering processes, and a THR dataset. In another example, the DB may store relationship information between CSGs corresponding to the threat scenarios and an SC dataset. For example, by storing the connection relationships between cybersecurity items and preconfiguration items in the individual engineering process, the DB may manage the relationship information between entire cybersecurity items. To receive the connection relationships between cybersecurity items and preconfiguration items in the individual engineering process described above, the fourth interface of FIG. 6 or the fifth interface of FIG. 7 to be described later may be provided.

The above-described interfaces may allow the operation server 110 of the disclosure to systematically manage data necessary for cybersecurity regulation compliance and to automatically link data necessary in the individual engineering processes based on the items and relationships defined in the preconfiguration process. Hereinafter, the DB construction method and system of the disclosure are described in detail with reference to the drawings.

FIG. 2 is a diagram illustrating a first screen of the first interface according to embodiments of the disclosure.

Referring to FIG. 2, the first screen of the first interface may include a search area 210 and a table area 220.

The search area 210 provides a function of helping users find information about desired configuration items. This area may include various search fields such as configuration item name, description, whether or not to use groups, and group properties, and users may input values into these fields to search for items meeting specific conditions. The search operation may be performed or reset using a search reset and search buttons on the right. The search reset and search buttons enable a list of configuration items to be queried and support querying configuration items (e.g., SC, CSR, V-TC, P-TC, THR, and MIT in FIG. 2). According to embodiments of the disclosure, predefined configuration items may be set such that the predefined configuration items may be modified only by the operator and not be modified or deleted by the user. In another embodiment, the user may directly add, modify, and delete configuration items other than the predefined configuration items.

The table area 220 provides a list of configuration items searched through the search area 210 or a list of entire configuration items, along with information about corresponding configuration item-specific properties, in a tabular format. The table area 220 may include columns such as a number column 221, a configuration item name column 222, a description column 223, a group use column 224 about whether a group is used, and a group property column 225. The respective columns may provide specific information about the corresponding items. For example, the configuration item name column 222 indicates the names of cybersecurity configuration items such as SC, CSR, V-TC, P-TC, THR, and MIT. The description column 223 provides a detailed description of the corresponding configuration items, while the group use column 224 indicates whether the configuration items are used as a group. The group property column 225 indicates the properties of the groups.

Each row of the table area 220 shows individual configuration item information or includes a button which allows an additional action for the individual configuration item to be performed. A configuration item property button 226 may show a page for managing detailed properties of the corresponding configuration item, and a group button 227 may show a page for setting the group of the corresponding configuration item. In a specific embodiment, clicking the configuration item property button 226 may show a configuration item-specific properties management page (or a pop-up window). Clicking the group button 227 shows a group setting pop-up window for each configuration item, thereby enabling the user to perform detailed management and setting for each item. For example, via the first screen of the first interface according to embodiments, the user may efficiently manage and query preconfiguration item-specific properties.

FIG. 3 illustrates a second screen of the first interface according to embodiments of the disclosure.

In an embodiment, the second screen of the first interface is a screen which is displayed in response to selection of the configuration item property button 226 on the first screen of FIG. 2, and is an interface which enables querying and inputting the respective preconfiguration item-specific properties. Via the second screen of the first interface, the user may query, add, modify, delete, and manage the history of preconfiguration item-specific properties.

Referring to FIG. 3, the second screen of the first interface may include a fundamental information area 310, a search area 320, and a management area 330.

The fundamental information area 310 shows fundamental information about configuration items which are to be currently managed. This area includes configuration item names and description fields. Referring to the embodiment in FIG. 3, the fundamental information area 310 shows SC, which is the preconfiguration item displayed on the second screen of the current first interface, and CS Control, which is a description of SC, and this may show the user that the current interface is handling property information about the SC configuration item.

The function of the search area 320, in which the list of configuration item-specific properties of the DB, is the same as or similarly varied from that of the search area 210 in FIG. 2, and thus a description of the search area is omitted.

The management area 330 is an area which provides a table including a list of properties of preconfiguration items searched for via the search area 320 and provides a management function for each property. This area includes a data export button 331, a register button 332, a batch register button 333, and a delete button 334. Clicking the data export button 331 enables downloading of a configuration item-property list file, and clicking the register button 332 may show a register item-specific property pop-up window, thereby enabling addition of new properties. Clicking the batch register button 333 may show a batch register configuration item-specific property pop-up window, thereby enabling a plurality of properties to be registered at once, and clicking the delete button 334 after selecting one or more properties to be deleted using a checkbox 336 may show a configuration item-specific property delete checking pop-up window, thereby enabling deletion of the selected properties.

Each column in a table 335 of the management area 330 includes fields such as number, property name, data input type, description, registrant name, and registration date fields for the respective individual properties, and each row provides specific information about the fields for the corresponding properties. Specifically, the property name field may indicate the name of the property, the data input type field may indicate the type of data input into the property, such as INPUT or SELECT, the description field may indicate an explanation of the property, the registrant name field may indicate the operator or user name who registered the property, and the registration date and time field may indicate when the property was registered. For example, a property having a property name SC_ID 337 indicates the unique identifier, i.e., a required property among properties of the preconfiguration items SC, in which the data input type may be INPUT, the registrant may be Admin, and the registration date and time may be 2025-03-20 13:00:30. The above-described properties may be used as field values in the tables of the second to fourth interfaces described later.

Each row of the table 335 includes a modification button 338 and a change history button 339. In an embodiment, clicking the modification button 338 may show a configuration item-specific property modification pop-up window (or page), thereby enabling changing of information about the property, and clicking the change history button 339 may show a configuration item-specific property change history pop-up window (or page), so that the change history of the property may be checked. For example, the first interface may provide an environment where the operator or user may query and modify the properties of the preconfiguration items, and the modified change history may also be queried. In this case, only the operator may modify the properties of the predefined preconfiguration items, and the user may only be able to query the properties of the predefined preconfiguration items.

More specifically, some of the attributes in the preconfiguration items are predefined properties, and some of the properties may be user-registered properties. In the embodiment of FIG. 3, the predefined properties of the SC items may be one or more of SC_ID (security control identifier), CS_Control (security control name), and SC Description (security control description). The user-registered properties which are not predefined properties may be SC_COL1, SC_COL2, and SC_COL3. As described above, the user may only query the predefined properties but may not delete or modify the predefined properties.

In another embodiment, in a case in which the configuration item to be queried in the first interface is a cybersecurity requirement (CSR), (i.e., in a case in which the preconfiguration item displayed in the fundamental information area 310 is "CSR"), the predefined property of the CSR item may be one of CSR ID or CSR description.

In another embodiment, in a case in which the configuration item to be queried in the first interface is a verification test case (V-TC), the predefined property of the V-TC item may be one or more of V-TC ID, V-TC description, V-TC precondition, V-TC test input, V-TC test step, V-TC expected result, V-TC test result, or V-TC test evidence.

In another embodiment, in a case in which the configuration item to be queried in the first interface is a penetration test case (P-TC) or a non-functional test case, the predefined property of the P-TC item may be one or more of P-TC ID (or non-functional test case ID), P-TC test method, P-TC description, P-TC precondition, P-TC test input (or non-functional test case test input), P-TC test step (or non-functional test case test procedure), P-TC expected result (or non-functional test case expected result), P-TC test result, or P-TC test evidence.

In another embodiment, in a case in which the configuration item to be queried in the first interface is a threat (THR) or a defined threat, the predefined property of the THR item may be one or more of THR ID (or defined threat ID) or THR description (or defined threat description).

In another embodiment, in a case in which the configuration item to be queried in the first interface is a mitigation (MIT), the predefined property of the MIT item may be one or more of predefined MIT ID or predefined MIT description.

The properties of the above-described preconfiguration items may be used as field values in the second to fourth interfaces described later. The properties of a preconfiguration item may necessarily include an identifier for each preconfiguration item. For example, in the embodiment of FIG. 3, the preconfiguration item SC may necessarily include SC_ID as the properties. The identifier is a property used to distinguish a specific dataset from other datasets, and may be a unique value which is referenced to set relationships between datasets.

Next, the processor may provide a second interface which enables inputting datasets for the properties of the preconfiguration items included in the first interface. Here, the dataset refers to a collection of data corresponding to the properties of the corresponding preconfiguration items, and may be data corresponding to each row in a table 420 of FIG. 4 to be described later.

FIG. 4 illustrates a second interface for dataset input for preconfiguration item-specific properties according to embodiments of the disclosure.

Referring to FIG. 4, the second interface may include configuration item tabs 411, data management buttons 412, 413, 414, 415, 416, and 417, and an operation status display area 419 at the top, as well as a table 420 for inputting and editing datasets at the bottom.

The configuration item tab 411 at the top may provide a tab, which allows the user to select a cybersecurity configuration item which is working, and at the same time, visually show the cybersecurity configuration item which is currently working. Referring to FIG. 4, the configuration item tab 411 enables switching of shown preconfiguration items among preconfiguration items of SC, CSR, V-TC, P-TC, THR, and MIT. For example, the configuration item tab 411 is an interface which enables exploration for dataset settings per configuration item.

In an embodiment of FIG. 4, in a case in which the data management buttons are selected, the data management buttons perform the function of supporting dataset management. More specifically, in a case in which the export file button 412 is selected, the export file button 412 performs the function of exporting dataset data about configuration items, and clicking this button allows a file of a dataset for configuration items stored in the DB to be downloaded. The import file button 413 performs the function of uploading and importing a dataset file for configuration items in the user terminal from configuration items, and clicking this button may show a file explorer allowing the user to select the file to import from the user terminal 120. In a specific embodiment, the downloaded or uploaded file may be an Excel file.

The download template button 414 enables downloading of a template file which provides a predefined form for importing a dataset file for configuration items. The add row button 415 provides the function of adding a new row (i.e., a new dataset) to the dataset table 420, and the row may be added below the current cursor position. The copy row button 416 may provide the function of copying the row at the current cursor position and pasting the row below the current cursor position in a case in which the copy row button is selected. The delete row button 417 may provide the function of deleting the row at the current cursor position. In another embodiment, the current cursor position may be changed to a user-designated position or another predefined position.

The operation status display area 419 shows the operation status for the current dataset. For example, in the case of changing data in respective cells by adding, copying, or deleting rows, the operation status display area shows "in progress," and if the user navigates away from the dataset editing interface, the operation status display area provides the function of temporarily storing changed data of the current dataset.

The table 420 at the bottom is a main area for inputting and editing actual datasets for configuration item-specific properties. In the embodiment of FIG. 4, each row of the table 420 includes a dataset for SC, and each column of the table 420 includes fields such as SC ID, CS Control, SC COL 1, SC COL 2, and SC COL 3, in which each field may correspond to the property of the corresponding configuration item. In the embodiment of FIG. 4, the predefined dataset fields (i.e., the properties of the configuration item) may be SC ID and CS Control, and the user-registered dataset fields may be SC COL 1, SC COL 2, and SC COL 3, but the disclosure is not limited thereto, and the respective field names may vary. The user may modify the value of a data cell to be changed by selecting (e.g., double-clicking) the data cell. Via the second interface, the user may input and manage the dataset for the properties of the preconfiguration items.

In an embodiment, the processor may provide a third interface which enables setting relationships between specific datasets for the attributes of configuration items. The third interface is an interface which enables linking and inputting a specific dataset of the first preconfiguration item and a specific dataset of the second preconfiguration item. The processor may set the relationship between the specific dataset of the first preconfiguration item and the specific dataset of the second preconfiguration item using values obtained via the third interface. For example, the third interface is an interface which may set the relationship between the predefined two preconfiguration items among a plurality of preconfiguration items in the preconfiguration process. The processor may store the preconfiguration relationship between datasets of preconfiguration items stored in the DB using the values obtained via the third interface.

FIG. 5 illustrates a third interface for setting relationships between datasets of preconfiguration items according to embodiments of the disclosure.

Referring to FIG. 5, the third interface may include a configuration item relationship tab 511 and data management buttons 512, 513, and 514 at the top, as well as a table 520 for setting relationships between datasets at the bottom. The configuration item relationship tab 511 at the top allows the user to select each pair of configuration items to set the relationship of the configuration items. In an embodiment, pairs of preconfiguration items, of which the mutual relationship may be set via the third interface, may be SC and CSR, V-TC and CSR, THR and P-TC, and THR and MIT, and the pairs of preconfiguration items may be displayed on the relationship tab 511 as shown in FIG. 5. For example, the third interface provides the relationship tab 511 to enable the user to select and set the relationship between two specific preconfiguration items. In this case, the pairs of preconfiguration items for relationship setting are predefined pairs, and may be items which the user is not allowed to modify and only the operator is allowed to add, delete, or modify. In the embodiment of FIG. 5, a case in which a pair of SC and CSR is selected from the relationship tab 511 is described by way of example.

The data management buttons 512, 513, and 514 are buttons for supporting management of relationship datasets. In a case in which the user clicks the add row button 512, a new row is added below the current cursor position, thereby allowing addition of a relationship dataset between configuration items, and in a case in which the cursor is not positioned, the row is added below the last row. Clicking the copy row button 513 enables copying of the row at the current cursor position and adding the copied row below the current cursor position, thereby replicating the existing dataset. Clicking the delete row button 514 after positioning the cursor on a dataset row to be removed provides the function of deleting the dataset row. In another embodiment, the current cursor position may be changed to a user-designated position or another predefined position.

The table 520 at the bottom is configured to enable inputting by linking a specific dataset of a first preconfiguration item to a specific dataset of a second preconfiguration item. In the embodiment of FIG. 5, the table 520 illustrates the relationship setting between SC and CSR, includes fields such as SC_CSR_ID, SC ID, CS Control Name, Description, CSR ID, and Description in each column, and includes specific datasets in each row. In a specific embodiment, the third interface may map an ID value corresponding to a specific dataset of the first preconfiguration item, e.g., SC-01 515, to one or more ID values corresponding to a specific dataset of the second preconfiguration item, e.g., CSR-01 516. In another example, the third interface may conversely map an ID value corresponding to a specific dataset of the second preconfiguration item to one or more ID values corresponding to a specific dataset of the first preconfiguration item.

The user may select the ID value of the first or second preconfiguration item from a provided list, thereby setting the remaining attribute values to be automatically input. As shown in FIG. 5, the third interface may provide an interface which allows inputting an ID field (e.g., CSR ID or SC ID) of the first or second preconfiguration item to be selected in a dropdown menu format, thereby enabling selection from among the previously input configuration item IDs. The dropdown menu appearing in the ID field of the first or second preconfiguration item may be based on the dataset obtained using the above-described second interface. For example, the third interface may provide an interface which allows selection and input only from the ID values of preconfiguration items stored in the DB, thereby preventing incorrect input of configuration item IDs.

As described above, the processor of the operation server 110 may provide the first to third interfaces as the preconfiguration process. In the preconfiguration process, preconfiguration items for cybersecurity regulation compliance are configured, and relationships between the preconfiguration items (e.g., SC↔CSR, V-TC↔CSR, THR↔P-TC, and THR↔MIT in an embodiment) may be set. In this case, relationship pairs of inputtable preconfiguration items may be pre-fixed, and the user may input dataset relationships for the predefined pairs of configuration items.

The processor of the operation server 110 may provide the fourth and fifth interfaces described below as the individual engineering process. In the individual engineering process, the relationships between a threat scenario or security goal not set in the above-described preconfiguration process and the preconfiguration items may be automatically set based on user input, and consequently, the relationships between entire cybersecurity items may be automatically set.

More specifically, in the individual engineering process, one or more threat scenarios (TS) may be generated after the TARA is performed at the vehicle, component, and system levels. The processor of the operation server 110 may provide the fourth interface which enables setting relationships between the threat scenarios and predefined threats by obtaining the generated threat scenarios or the fifth interface which enables setting relationships between the cybersecurity goals (CSG), corresponding to specific threat scenarios among the threat scenarios, and the security control.

For example, the third interface is an interface for setting relationships between preconfiguration items in the preconfiguration process, and the fourth or fifth interface is an interface for setting relationships between TS or CSG and preconfiguration items in the individual engineering process. In this case, the fourth or fifth interface may be controlled to allow only predefined data input, thereby preventing data mixing and incorrect input caused by arbitrary user input.

As described above, because the relationships between SC and CSR, V-TC and CSR, THR and P-TC, and THR and MIT are set through the preconfiguration process, the processor of the operation server 110 may set relationships between entire cybersecurity items by setting the relationships between TS and THR and between CSG, corresponding to specific TS, and SC through the individual engineering process. Hereinafter, the fourth and fifth interfaces of the individual engineering process will be described in more detail.

FIG. 6 illustrates a fourth interface for setting relationships between threat scenarios and predefined threats according to embodiments of the disclosure.

Referring to FIG. 6, the fourth interface which enables setting relationships between threat scenarios (TS) and predefined threats (THR) is illustrated. The fourth interface according to embodiments provides an environment for setting relationships between TS datasets and THR datasets, and provides an area where one or more datasets may be selected from a list of THR datasets to be mapped to a selected TS dataset. Specifically, referring to FIG. 6, an interface may be provided, which allows one or more datasets to be selected from the dataset list of THR items to be mapped to the selected dataset of TS items.

More specifically, the fourth interface shown in FIG. 6 may include a configuration item relationship tab 610, a row modification area 620, and a TS and THR list table 630 at the top. The configuration item relationship tab 610 at the top may show a pair of configuration items, i.e., TS and THR, which are currently being set.

The row modification area 620 includes an add row button, a copy row button, and a delete row button. The add row button provides the function of adding a new row (i.e., a new dataset) to the table 630, and the row may be added below the current cursor position. In a case in which the row copy button is selected, the row copy button may provide the function of copying the row at the current cursor position and pasting the row below the current cursor position. The delete row button may provide the function deleting the row at the current cursor position.

In an embodiment, a user may set one or more datasets of predefined threats mapped to specific datasets of threat scenarios via the fourth interface. Specifically, the fourth interface provides the TS and THR list table 630, which includes a THR mapping field 633 which provides a list of predefined threats (e.g., a list indicated by threat numbers) which may be mapped to the datasets of the threat scenarios. The user may set a THR which is to be mapped to a corresponding TS by clicking a dropdown button 634.

More specifically, the TS and THR list table 630 includes data for setting the TS and THR relationship. The table 630 shows information about one or more threat scenarios, each of which may include a TS ID field 631 as a unique identifier and a TS description field 632 in which detailed information is described. For example, in the table 630, a threat scenario ID CVTELE_THREAT_2 where the "Integrity" of "Gathering startup information" having "ASSET_2" as an asset ID is violated. The table 630 may further include a number field, asset and asset ID fields (indicating assets to be protected and unique identifiers of the assets), a Security property field (indicating security properties which the assets must satisfy, such as Confidentiality, Integrity, Authenticity), Damage scenario and Damage Scenario ID fields (indicating specific damage situations which may occur in a case in which the security property is violated and identifiers of the specific damage situations), a STRIDE field (indicating security models classifying threat types), and the THR mapping field 633.

The THR mapping field 633 in the THR list table 630 provides a list of datasets for THR items, and the user may select a THR list mapped to the corresponding TS by selecting a checkbox displayed in the dropdown menu 635 for the THR dataset list. For example, in a case in which the user selects the dropdown button 634 positioned in the THR mapping field 633 of the row CVTELE_THREAT_2, the number list of predefined threats (e.g., 6.2, 6.3, 7.1, 7.2, 8.1, and 8.2), which may be mapped, is displayed in the form of the dropdown menu 635. The user may select one or more numbers (e.g., 7.1, 7.2, and 8.1) related to the threat scenario from the list using a checkbox or the like. The dataset of the predefined threats corresponding to the numbers selected by the user as described above may be set to be mapped to the dataset of the corresponding threat scenario CVTELE_THREAT_2.

The list of numbers of predefined threats provided via the THR mapping field 633 may be determined based on values obtained using the second interface in the preconfiguration process. For example, the THR list set in the preconfiguration process may be provided as the dropdown menu 635. Consequently, via the fourth interface, the THR list table 630 may be provided such that the stored THR list may be retrieved and selected, and standardized input may be obtained by a controlled input method which maps selected items to the TS. Via the fourth interface, the user may link the dataset for the threat scenarios to the dataset for the THR items to set the relationships between the threat scenarios and the THR items.

FIG. 7 illustrates a fifth interface for setting the relationship between a security goal and a security control according to embodiments of the disclosure.

Referring to FIG. 7, the fifth interface which enables setting relationships between security goals (CSG) and security controls (SC) is illustrated. The fifth interface according to embodiments provides an environment for setting relationships between CSG datasets and SC datasets, and provides an area where one or more datasets may be selected from a list of SC datasets to be mapped to a selected CSG dataset. Specifically, referring to FIG. 7, a table 720 and a table 730 may be provided, in which the table 720 provides a list of CSGs, and the table 730 enables selection of one or more datasets from the dataset list of SC items to be mapped to a specific dataset of CSG items.

The configuration item relationship tab 710 at the top may show a pair of configuration items SC and CSG which are being currently set.

The CSG table 720 includes data for setting CSG and SC relationships. This table includes CSG_ID, Asset, Impact rating result, Attack feasibility rating, Risk value, Security goal 721, and Security control mapping 722 as CSG property fields in each column, as well as detailed information as CSG datasets in each row. In particular, the field of Security control mapping 722 is positioned next to the field of Security Goal 721, and an SC to be mapped to the corresponding CSG may be set by clicking a security goal setting button 723. Clicking the setting button 723 displays a screen in a designated area showing the SC list table 730 for SC mapping, thereby allowing the user to directly select an SC.

The SC list table 730 provides a list of datasets for SC items input via the second interface, and the user may select an SC list mapped to the corresponding CSG by selecting a checkbox 731 for the dataset list of the SC. According to the embodiment of FIG. 7, the SC list table 730 provides information about SC_ID and CS Control Name, and CS Description fields as an SC dataset list, and the user may view this information and select an SC to be mapped to the corresponding CSG via the checkbox 731.

For example, in the embodiment of FIG. 7, in a case in which the user selects the setting button 723 for a security goal having CSG_02 as a CSG ID, the SC list table 730 of FIG. 7 may be displayed, and the user may select the checkbox 731 for selecting SCs having SC_01, SC_05, and SC_07 as IDs to map the corresponding SCs to CSG_02. The list of SCs mapped to the selected CSG may be displayed at the top of the table 730 as mapped security control IDs. For example, via the fifth interface, the SC list table 730 may be provided such that the stored SC list is retrieved and selected, and standardized input may be obtained a using a controlled input method which maps the selected items to the CSG. Via the fifth interface, the user may link the datasets for the CSG items to the datasets for the SC items to set the relationships between the CSG items and the SC items.

As described above, the processor of the operation server 110 may set relationships between TS and THR and between CSG and SC using user input obtained via the fourth or fifth interface in the individual engineering process. Thus, the processor of the operation server 110 may set relationships among the entire cybersecurity items SC, CSR, V-TC, P-TC, THR, MIT, TS, and SCG using the SC↔CSR, V-TC↔CSR, THR↔P-TC, and THR↔MIT relationship information described in the preconfiguration process and the TS↔THR and CSG↔SC relationships set in the individual engineering process.

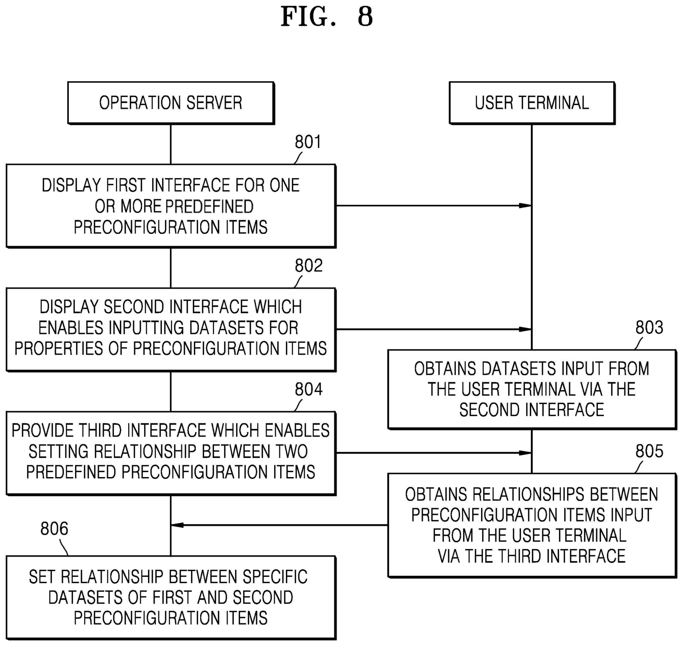

FIG. 8 is a flowchart illustrating operations of the operation server and the user terminal in the preconfiguration process according to embodiments.

Referring to FIG. 8, first, the operation server 110 provides a first interface for one or more predefined preconfiguration items in 801.

Thereafter, in 802, the operation server 110 provides a second interface which enables inputting datasets for the properties of the preconfiguration items included in the first interface. In 803, the operation server 110 obtains datasets input from the user terminal 120 via the second interface.

Thereafter, in 804, the operation server 110 provides a third interface which enables setting the relationship between two predefined preconfiguration items among a plurality of preconfiguration items. In 805, the operation server 110 obtains relationships between preconfiguration items input from the user terminal 120 via the third interface.

Thereafter, in 806, the operation server 110 sets the relationship between the first and second preconfiguration items using values obtained via the third interface.

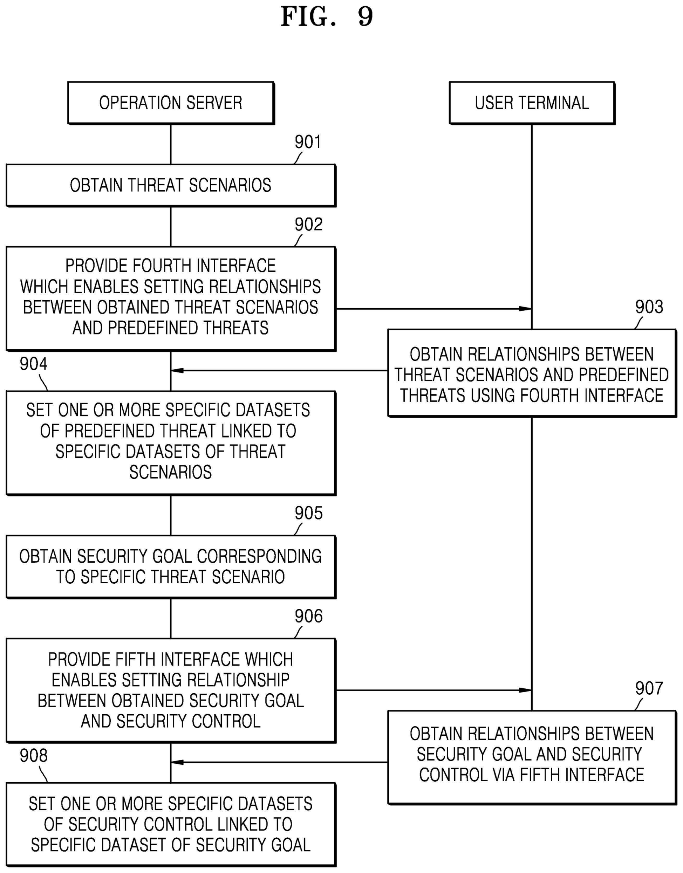

FIG. 9 is a flowchart illustrating operations of the operation server and the user terminal in the individual engineering process according to embodiments.

First, in 901, the operation server 110 obtains threat scenarios.

Thereafter, in 902, the operation server 110 provides a fourth interface which enables setting relationships between the obtained threat scenarios and predefined threats. In 903, the operation server 110 obtains the relationships between the threat scenarios and the predefined threats from the user terminal 120 using the fourth interface.

Thereafter, in 904, the operation server 110 sets one or more specific datasets of a predefined threat linked to the specific datasets of the threat scenarios using the values obtained via the fourth interface.

Thereafter, in 905, the operation server 110 obtains a security goal corresponding to a specific threat scenario among the threat scenarios.

Thereafter, in 906, the operation server 110 provides a fifth interface which enables setting relationships between the obtained security goal and the security control. In 907, the operation server 110 obtains relationships between the security goal and security control from the user terminal 120 via the fifth interface.

Thereafter, in 908, the operation server 110 sets one or more specific datasets of the security control linked to the specific dataset of the security goal using the value obtained via the fifth interface.

In an embodiment, the interface provided by the disclosure enables the efficient and systematic definition and management of complex relationships among a plurality of cybersecurity items. According to the disclosure, the presence of the preconfiguration process may automate generation of preconfiguration item-specific relationships, which was previously performed manually, to enhance user efficiency and convenience and link relationships between entire cybersecurity items in the individual engineering process. In the disclosure, a number of complex data may be registered and managed in data management specifications intended in the disclosure by specifying the data registration sequence, the items to be input in respective processes, the structure, and the like. Furthermore, the user input structure, sequence, and the like may be controlled, and various validity inspections (e.g., duplicate inspection, similarity-based inspection, and null inspection) may be automatically performed in an associated manner before moving to the next process after user input.

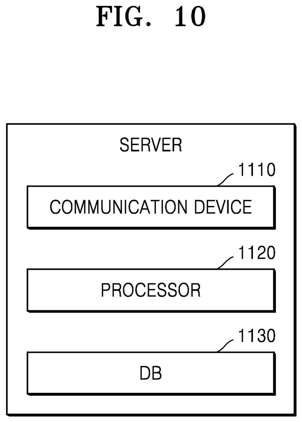

FIG. 10 is a block diagram of a server according to embodiments.

In an embodiment, a server 1100 shown in FIG. 10 may be the operation server 110 shown in FIG. 1.

Referring to FIG. 10, the server 1100 may include a communication device 1110, a processor 1120, and a database (DB) 1130. The server 1100 shown in FIG. 10 only includes components related to the embodiment. Therefore, a person of ordinary knowledge in the art will understand that other general-purpose components may be included in addition to those shown in FIG. 10.

The communication device 1110 may include one or more components enabling wired/wireless communication with other nodes. For example, the communication device 1110 may include at least one of a short-range communication device (not shown), a mobile communication device (not shown), and a broadcast receiver (not shown).

The DB 1130 is hardware to store various data processed in the server 1100, and may store programs for processing and controlling the processor 1120. The DB 1130 may store payment information, user information, and the like.

The DB 1130 may include random access memory (RAM), such as dynamic random access memory (DRAM) and static random access memory (SRAM), read-only memory (ROM), electrically erasable programmable read-only memory (EEPROM), CD-ROM, Blu-ray or another optical disk storage, a hard disk drive (HDD), a solid state drive (SSD), or flash memory.

The processor 1120 controls the overall operation of the server 1100. For example, by executing programs stored in the DB 1130, the processor 1120 may control the input device (not shown), the display (not shown), the communication device 1110, the DB 1130, and the like. The processor 1120 may control the operation of the server 1100 by executing programs stored in the DB 1130. The processor 1120 may control at least some of the operations of the components described above with reference to FIGS. 1 to 9.

The processor 1120 may be implemented using at least one of an application specific integrated circuit (ASIC), a digital signal processor (DSP), a digital signal processing device (DSPD), a programmable logic devices (PLD), a field programmable gate array (FPGA), a controller, a microcontroller, a microprocessor, or other electrical units for performing functions.

According to the means for solving the problems of the disclosure described above, the efficiency and convenience of regulatory compliance may be improved by constructing a database which manages information on cybersecurity items and automatically sets relationships between cybersecurity items.

By providing interfaces, the registration sequence and structure of data may be controlled, thereby ensuring consistency and accuracy even in management of complex data.

Furthermore, managing relationships between items stored in the database may automate repetitive and redundant tasks and perform various validity verifications, thereby enhancing productivity, reducing costs, and ensuring consistency in regulatory compliance.

The embodiments of the disclosure may be implemented in the form of computer programs executable on a computer using various components, and such computer programs may be stored in computer-readable media. Here, the computer-readable media may include: magnetic media such as hard disks, floppy disks, and magnetic tapes; optical recording media such as CD-ROMs and DVDs; magneto-optical media such as floptical disks; and hardware devices specifically configured to store program instructions and execute the program instructions such as ROM, RAM, and flash memory.

The computer programs may be specifically designed and configured for the disclosure or may be known and available to a person of ordinary knowledge in the art of computer software. Examples of computer programs may include machine language code created by compilers and high-level language code executable on computers using interpreters.

The method according to various embodiments of the disclosure may be provided embodied in a computer program product. The computer program product may be traded as a commodity between a seller and a buyer. The computer program product may be distributed in the form of a device-readable storage medium (e.g., a compact disc read-only memory (CD-ROM), or may be directly between two user devices via an application store (e.g., Play Store^{™}) or distributed online (e.g., via download or upload). In the case of online distribution, at least a portion of the computer program product may be at least temporarily stored or generated on a device-readable storage medium, such as memory of a manufacturer's server, an application store's server, or a proxy server.

## Claims

1. A database construction method for cybersecurity regulation compliance, the database construction method comprising:
displaying a first interface for one or more predefined preconfiguration items related to cybersecurity;
providing a second interface which enables inputting datasets for properties of the preconfiguration items included in the first interface;
providing a third interface which enables setting a relationship between two predefined preconfiguration items among the plurality of preconfiguration items; and
setting a relationship between a specific dataset of a first preconfiguration item and a specific dataset of a second preconfiguration item among the plurality of preconfiguration items using a value obtained via the third interface.

2. The database construction method of claim 1, further comprising:
after setting the relationship between the datasets,
obtaining a threat scenario;
providing a fourth interface which enables setting a relationship between the obtained threat scenario and a predefined threat; and
setting one or more specific datasets of the predefined threat mapped to a specific dataset of the threat scenario using a value obtained via the fourth interface.

3. The database construction method of claim 2, further comprising:
after setting the relationship between the datasets,
obtaining a security goal corresponding to a specific threat scenario among the threat scenarios;
providing a fifth interface which enables setting a relationship between the obtained security goal and security control; and
setting one or more specific datasets of the security control connected to a specific dataset of the security goal using a value obtained via the fifth interface.

4. The database construction method of claim 2,
wherein the fourth interface provides a list of the predefined threats mappable to the dataset of the threat scenario, and maps a dataset of the predefined threat selected by a user from the list to the specific dataset of the threat scenario.

5. The database construction method of claim 3,
wherein the fifth interface provides a dataset list of the security control mappable to the specific dataset of the security goal, and maps a dataset selected by a user from a dataset list of the security control to a specific dataset of the security goal.

6. The database construction method of claim 5,
wherein a dataset list of the predefined threat or the dataset list of the security control is based on a value obtained via the second interface.

7. The database construction method of claim 5,
wherein a specific dataset of the one or more predefined preconfiguration items is linked to a specific dataset of the threat scenario or the security goal.

8. The database construction method of claim 1,
wherein the one or more preconfiguration items are changeable on the first interface based on operator input.

9. The database construction method of claim 1,
wherein the first interface provides an interface for adding preconfiguration items or item-specific properties other than the predefined preconfiguration items or the predefined item-specific properties based on user input, and provides change history information about properties of the predefined preconfiguration items.

10. The database construction method of claim 1,
wherein the dataset input via the second interface comprises a value of an identifier field which uniquely identifies each dataset of the properties of the preconfiguration items.

11. The database construction method of claim 1,
wherein providing the third interface provides an interface which enables linking and inputting a specific dataset of the first preconfiguration item and a specific dataset of the second preconfiguration item.

12. The database construction method of claim 1,
wherein the third interface comprises mapping an identifier corresponding to a specific dataset of the first preconfiguration item to an identifier corresponding to a specific dataset of the one or more second preconfiguration items or mapping an identifier corresponding to a specific dataset of the second preconfiguration item to an identifier corresponding to a specific dataset of the one or more first preconfiguration items.

13. The database construction method of claim 1,
wherein the third interface is an interface which enables setting a relationship between two predefined preconfiguration items among the plurality of preconfiguration items.

14. The database construction method of claim 1,
wherein the first and second predefined preconfiguration items among the preconfiguration items are one of "security control-security control requirement," "verification test case- security control requirement," "predefined threat-penetration test case," or "'predefined threat-predefined mitigation."

15. A database construction system for cybersecurity regulation compliance, the database construction system being configured to:
display a first interface for one or more predefined preconfiguration items;
provide a second interface which enables inputting datasets for properties of the preconfiguration items included in the first interface;
provide a third interface which enables setting a relationship between two predefined preconfiguration items among the plurality of preconfiguration items; and
set a relationship between a specific dataset of a first preconfiguration item and a specific dataset of a second preconfiguration item among the plurality of preconfiguration items using a value obtained via the third interface.
